(19) Europäisches Patentamt
European Patent Office
Office européen des brevets

(11) **EP 3 183 316 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(51) Int Cl.:
*C09J 123/18* (2006.01)    *C08L 23/22* (2006.01)
*F16L 58/04* (2006.01)

(21) Anmeldenummer: **15798363.6**

(22) Anmeldetag: **16.11.2015**

(86) Internationale Anmeldenummer:
**PCT/EP2015/076692**

(87) Internationale Veröffentlichungsnummer:
**WO 2016/165791 (20.10.2016 Gazette 2016/42)**

(54) **KORROSIONSSCHUTZZUSAMMENSETZUNG**

ANTI-CORROSION COMPOSITION

COMPOSITION ANTICORROSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2015 DE 102015105763**

(43) Veröffentlichungstag der Anmeldung:
**28.06.2017 Patentblatt 2017/26**

(60) Teilanmeldung:
**18186580.9**

(73) Patentinhaber: **DENSO-Holding GmbH & Co.**
**51371 Leverkusen (DE)**

(72) Erfinder:
• **KAISER, Thomas Markus**
**52459 Inden (DE)**

• **GRYSHCHUK, Oleg**
**51381 Leverkusen (DE)**

(74) Vertreter: **Geskes, Christoph**
**Geskes Patent- und Rechtsanwälte**
**Gustav-Heinemann-Ufer 74b**
**50968 Köln (DE)**

(56) Entgegenhaltungen:
WO-A1-98/49249    DE-A1-102011 054 826
US-A- 4 426 468    US-A- 5 295 525
US-A- 5 817 413    US-B2- 7 666 341

• **John S. Dick: "Rubber Technology: Compounding and Testing for Performance", 3 July 2014 (2014-07-03) ISBN: 9783446439733 page 174,**

**Beschreibung**

Die vorliegende Erfindung betrifft eine Verwendung einer Zusammensetzung zum Schutz von Rohren und Rohre umfassenden Anlagen sowie sonstigen Anlagen und Einbauten vor Korrosion als auch ein Verfahren zur Erzielung eines Korrosionsschutzes und ein mindestens einschichtiges Wickelband.

Korrosionsschutzzusammensetzungen bzw. Korrosionsschutzsysteme beispielsweise für Rohranlagen wie Pipelines, aber auch technische Anlagen etc. sind vielfältig aus dem Stand der Technik bekannt. So offenbart beispielsweise EP 0 421 607 A1 ein Bandumwicklungssystem zum Schutz von rohrförmigen Gegenständen, das eine Innenumwicklung, die die Oberfläche des zu schützenden Gegenstandes bedeckt, und eine über die Innenumwicklung angeordnete Außenumwicklung umfasst, wobei die Innenumwicklung eine stoßfeste Schicht mit einer Klebschicht auf ihrer inneren Oberfläche und eine Schicht auf ihrer äußeren Oberfläche umfasst, und wobei die Außenumwicklung eine Trägerschicht mit einer Schicht auf mindestens einer ihrer Oberflächen umfasst, wobei die Innenumwicklung und die Außenumwicklung warm verschmelzbares Material einschließen, wobei das Bandumwicklungssystem auf den rohrförmigen Gegenstand so aufgebracht wird, dass bei Erwärmen und Abkühlen die Außenumwicklung mit der Innenumwicklung warm verschmolzen und dadurch eine vollständig geschlossene schützende Beschichtung gebildet wird. Durch das dort offenbarte Bandumhüllungssystem soll die Aufgabe gelöst werden, eine Verbesserung gegenüber zerstörerischen äußeren Kräften herzuführen, indem ein kontinuierliches, nahtloses, schützendes Bandbeschichtungssystem zur Verfügung gestellt wird. Eine der Klebstoffschichten kann dabei beispielsweise aus Butylkautschuk hergestellt sein. Als warm schmelzbares Material werden beispielweise Ethylenvinylacetat, Ethylenmethylacrylat und Polyethylen niedriger Dichte eingesetzt. Problematisch an dem in EP 0 421 607 A1 offenbarten Bandumhüllungssystem ist gerade bei höheren Temperaturen umhüllter Rohrsysteme oder technischer Anlagen gleich welcher Art der Kontakt zwischen der Außenseite eines Pipelinerohres mit der Klebstoffschicht, beispielsweise aus Butylkautschuk, die sich von der Außenseite des Pipelinerohres lösen kann.

Entsprechende Probleme ergeben sich auch dann, wenn Korrosionsschutzzusammensetzungen nicht in Bandform, sondern beispielsweise in Form einer Spachtelmasse eingesetzt werden. Auch hier ist gerade bei hohen Temperaturen oftmals eine nicht hinreichende Haftung der Masse auf beispielsweise Stahloberflächen gleich welcher Art gegeben. Die Haftung von Massen oder Bändern wird insbesondere durch die Schälfestigkeit, auch Schälwiderstand genannt, beschrieben, die z.B. gemäß DIN EN 12068 bestimmbar ist. Aber nicht nur bei hohen Temperaturen, sondern schon bei Raumtemperatur (20°C oder 23°C) ist die vorstehend genannte Haftung oftmals verbesserungswürdig. Eine verbesserte Haftung wird durch die Verwendung eines lösemittelhaltigen Primers / Haftvermittlers erzeugt.

US 5,295,525 offenbart eine Dichtzusammensetzung für unter Druck stehende Produkte wie Autoreifen, umfassen ein hochmolekulares Elastomer, ein niedrigmolekulares flüssiges Elastomer, das im Wesentlichen Eisenfrei ist, und ein Vernetzungsmittel. US 4,426,468 offenbart ebenfalls eine Dichtzusammensetzung für Autoreifen umfassend einen gehärteten Butylkautschuk in Form eines Copolymers mit einem Molekulargewicht über 100.000 und einen oder mehr klebrigmachende Mittel.

Es ist Aufgabe der vorliegenden Erfindung, eine Korrosionsschutzzusammensetzung zur Verfügung zu stellen, welche eine verbesserte Haftung auf Oberflächen gleich welcher Art, beispielsweise Rohren oder Rohre umfassenden Anlagen sowie sonstigen Einbauten aufweist, und dabei vorzugsweise weiterhin auch eine verbesserte mechanische Belastbarkeit aufweist.

Diese Aufgabe wird gelöst durch eine Verwendung einer Zusammensetzung umfassend mindestens einen ersten Butylkautschuk mit einer scheinbaren Viskosität nach Brookfield gemäß DIN EN ISO 2555 in der Version 2000-01 bei 66°C in einem Bereich von etwa 400.000 mPa · s bis etwa 2.000.000 mPa · s, bevorzugt von etwa 600.000 mPa · s bis etwa 1.600.000 mPa · s, und einem mittleren Molekulargewicht $M_w$ (auch mittlere Molmasse oder molekulare Masse $M_w$ genannt) in einem Bereich von etwa 20.000 g/mol bis etwa 60.000 g/mol, bevorzugt von etwa 32.000 g/mol bis 48.000 g/mol, umfassend mindestens weiterhin einen zweiten Butylkautschuk mit einem mittleren Molekulargewicht $M_w$ in einem Bereich von etwa 150.000 g/mol bis etwa 2.000.000 g/mol, bevorzugt von etwa 300.000 g/mol bis etwa 1.800.000 g/mol, weiter bevorzugt in einem Bereich von etwa 200.000 g/mol bis etwa 500.000 g/mol, und einer Mooney-Viskosität ML (1 + 8) bei 125°C in einem Bereich von etwa 25 MU bis etwa 65 MU, bevorzugt von etwa 30 MU bis etwa 60 MU, noch weiter bevorzugt von etwa 40 MU bis etwa 59 MU, und noch weiter bevorzugt von etwa 40 MU bis etwas 55 MU, gemessen gemäß ISO 289 in der Version von 2005 oder gemäß ASTM 1604-04, zum Schutz von Rohren und Rohre umfassenden Anlagen sowie sonstigen Anlagen und Einbauten vor Korrosion.

Der mindestens eine erste Butylkautschuk ist vorzugsweise ausgewählt aus einer Gruppe umfassend depolymerisierte Butylkautschuke. Diese werden durch Depolymerisation von Butylkautschuken (IIR) erhalten. Der mindestens eine Butylkautschuk weist ein geringes Molekulargewicht auf. Er liegt besonders bevorzugt bei 23°C in flüssiger Form vor. Demgegenüber ist der mindestens eine zweite Butylkautschuk nicht depolymerisiert und weist ein im Vergleich zum ersten Butylkautschuk hohes Molekulargewicht auf. Der mindestens eine zweite Butylkautschuk liegt vorzugsweise bei 23°C in fester Form vor. Die DIN EN ISO 2555: 2000-01 "Kunststoffe - Harze im flüssigen Zustand, als Emulsionen oder Dispersionen" wurde zur Bestimmung der scheinbaren Viskosität nach dem Brookfield-Verfahren herangezogen zur Bestimmung der Viskosität des mindestens einen ersten Butylkautschuks.

Unter dem Begriff Butylkautschuk werden im Sinne der vorliegenden Erfindung insbesondere verstanden Co- oder Block-Co-Polymere von Isobuten mit etwa 0,5 Gew.-% bis etwa 5,0 Gew.-% Isopren, bezogen auf die Gesamtmenge des Butylkautschuks, die insbesondere durch kationische Polymerisation hergestellt werden. Über das eingesetzte Isopren und den in diesem vorhandenen Kohlenstoff-Kohlenstoff-Doppelbindungen, die als funktionelle Gruppe wirken, kann eine Vernetzungsreaktion initiiert werden, so dass hierdurch die Anforderungen an hinreichend dichte Korrosionsschutzumhüllungen für Rohre oder Einbauten einschließlich sonstiger Anlagen erfüllt werden können. Im Sinne der vorliegenden Erfindung fallen unter den Begriff Butylkautschuk insbesondere auch halogenierte Butylkautschuke, insbesondere solche, die chloriert bzw. bromiert sind (Chlorobutylkautschuk bzw. Brombutylkautschuk). Es können auch Gemische mehrerer Butylkautschuke eingesetzt werden, d. h. mehr als mindestens ein Butylkautschuk.

Der mindestens eine zweite Butylkautschuk ist vorteilhafterweise in einer Menge in einem Bereich von etwa 5 Gew.-% bis etwa 50 Gew.-%, weiter bevorzugt in einer Menge in einem Bereich von etwa 10 Gew.-% bis etwa 40 Gew.-%, noch weiter bevorzugt in einer Menge in einem Bereich von etwa 15 Gew.-% bis etwa 35 Gew.-%, jeweils bezogen auf die Gesamtmenge der Zusammensetzung, in der Zusammensetzung vorhanden. Je höher der Anteil an zweitem Butylkautschuk in der Zusammensetzung ist, desto höher ist grundsätzlich die Schälfestigkeit. Dies wird jedoch mit dem Nachteil erkauft, dass in einem Schälversuch ein adhäsives und damit nachteiliges Trennbild erhalten wird.

Vorteilhafterweise weist der mindestens eine zweite Butylkautschuk Werte für die Ungesättigtheit in einem Bereich von etwa 1 Mol-% bis etwa 3 Mol-%, weiter bevorzugt in einem Bereich von etwa 1,3 Mol-% bis etwa 2,5 Mol-%, auf. Dies bedeutet, dass bevorzugt etwa 1 Mol-% bis etwa 3 Mol-%, weiter bevorzugt etwa 1,3 Mol-% bis etwa 2,5 Mol-%, ungesättigte Bindungen, d. h. Kohlenstoff-Kohlenstoff-Doppelbindungen, als funktionelle Gruppen im mindestens einen zweiten Butylkautschuk vorliegen. Besonders bevorzugt ist der mindestens eine zweite Butylkautschuk hergestellt durch eine Co-Polymerisation von Isobuten und Isopren in Methylchlorid als Lösemittel.

Der mindestens eine erste Butylkautschuk, vorzugsweise depolymerisierte erste Butylkautschuk, ist vorteilhafterweise in einer Menge in einem Bereich von etwa 20 Gew.-% bis etwa 66 Gew.-%, weiter bevorzugt in einer Menge in einem Bereich von etwa 25 Gew.-% bis etwa 55 Gew.-%, weiter bevorzugt in einer Menge in einem Bereich von etwa 28 Gew.-% bis etwa 45 Gew.-%, jeweils bezogen auf die Gesamtmenge der Zusammensetzung, in der Zusammensetzung vorhanden. Der mindestens eine erste Butylkautschuk weist vorteilhafterweise die Eigenschaft auf, bereits bei niedrigen Temperaturen, insbesondere bei Raumtemperaturen von beispielsweise 20°C oder 23°C oder aber bei leicht erhöhten Temperaturen von beispielsweise 40°C bis 50°C eine Vernetzungsreaktion aufgrund der in diesen vorhandenen ungesättigten Kohlenstoff-Kohlenstoff-Doppelbindungen einzugehen.

Das Verhältnis des mindestens einen ersten Butylkautschuks, also der Gesamtmenge des eingesetzten ersten Butylkautschuks, auch wenn dieser eine Mischung darstellt, zu dem mindestens einen zweiten Butylkautschuk, d. h. der Gesamtmenge des zweiten Butylkautschuks, auch wenn dieser eine Mischung darstellt, liegt vorteilhafterweise in einem Bereich von etwa 2,5:1 bis etwa 1:2,5, weiter bevorzugt in einem Bereich von etwa 2:1 bis etwa 1:2, noch weiter bevorzugt in einem Bereich von etwa 2,5:1 bis etwa 1,3:1. In diesen Bereichen werden einerseits hinreichend gute Werte für die Schälfestigkeit und damit eine gute Haftung der Zusammensetzung auf beispielsweise Stahloberflächen von Rohren o. ä. bei gleichzeitig kohäsivem Trennbild erhalten. Im Unterschied zu einer kohäsiven Trennung wäre nachteilig eine adhäsive Trennung bzw. adhäsives Trennbild, welches zwischen einer Korrosionsschutzzusammensetzung und dem diese bedeckenden Material, beispielweise einem Stahlrohr, erhalten werden würde. Bei einer kohäsiven Trennung bzw. einem kohäsiven Trennbild erfolgt ein Verbleib der Korrosionsschutzzusammensetzung zumindest in Teilen auf dem abgedeckten Produkt, beispielsweise einem Stahlrohr.

Die Zusammensetzung weist neben dem mindestens einen ersten und dem mindestens einen zweiten Butylkautschuk vorteilhafterweise keinen Weichmacher, insbesondere keinen Weichmacher in Form eines Prozessöles, auf. Der Einsatz eines solchen Weichmachers kann erspart bleiben, da der mindestens eine erste Butylkautschuk aufgrund des geringen Molekulargewichtes üblicherweise in einer flüssigen Form zur Verfügung gestellt ist, so dass der Zusatz eines Weichmachers nicht mehr von Nöten ist. Gleichwohl kann im Sinne der vorliegenden Erfindung vorgesehen sein, dass ein Weichmacher, insbesondere in Form eines Prozessöles, eingesetzt wird. Soweit vorgesehen, kann die Korrosionsschutzzusammensetzung als Weichmacher ein Prozessöl umfassen, bevorzugt in einer Menge in einem Bereich von etwa 0,5 Gew.-% bis etwa 10 Gew.-%, weiter bevorzugt in einer Menge in einem Bereich von etwa 2 Gew.-% bis etwa 8 Gew.-%, jeweils bezogen auf die Gesamtmenge der Zusammensetzung.

Die Korrosionsschutzzusammensetzung weist den großen Vorteil auf, dass diese bereits bei Raumtemperaturen von beispielsweise 23°C hervorragende Werte für die Schälfestigkeit/Schälwiderstand gemäß DIN EN 12068 in der Version 1999-03 aufweist, insbesondere Werte, welche größer als etwa 3 N/cm, weiter bevorzugt größer als etwa 5 N/cm, noch weiter bevorzugt größer als etwa 10 N/cm sind, und wobei Werte von bis zu etwa 15 N/cm, bevorzugt bis zu etwa 20 N/cm, erreicht werden. Die vorgenannten Schälfestigkeiten, auch Schälwiderstand genannt, beziehen sich auf die mechanische Schälprüfung gemäß der DIN EN 12 068 in der Version 1999-03, und zwar bezogen auf sowohl eine Aufbringung der Korrosionsschutzzusammensetzung auf eine Werksumhüllung eines beispielsweise Rohres wie einer Gasleitung oder Pipeline, als auch bezogen auf eine nicht umhüllte Rohraußenfläche, beispielsweise eines Stahlrohres.

Die Korrosionsschutzzusammensetzung weist erheblich verbesserte Werte für die Schälfestigkeit bzw. den Schälwiderstand gemäß DIN EN 12068 in der Version 1999-03 und damit eine sehr gute mechanische Belastbarkeit, verglichen mit aus dem Stand der Technik bekannten Korrosionsschutzzusammensetzungen, auf. Dies gilt auch bei höheren Temperaturen. Auch weist die Korrosionsschutzzusammensetzung vorteilhafterweise eine gute Haftung auf Untergründen gleich welcher Art, insbesondere auf Rohren wie Pipelines oder Rohre aufweisenden Anlagen, auf, gleich ob diese bereits mit einer Werksumhüllung versehen sind oder aber eine solche nicht aufweisen, in letzterem Fall also eine metallische Oberfläche, insbesondere eine Stahloberfläche zur Aufbringung der Korrosionsschutzzusammensetzung zur Verfügung stellen. Besonders vorteilhafterweise ist es möglich, dass die Korrosionsschutzzusammensetzung ohne vorherige Aufbringung eines Primers/Haftvermittlers aufgebracht werden kann, wodurch der arbeits- und zeitaufwendige Schritt der Vorbehandlung eben mit einem solchen Primer entfällt. Gleichwohl ist im Sinne der vorliegenden Erfindung nicht ausgeschlossen, dass ein solcher Primer eingesetzt wird. Geeignete Primer bestehen vorteilhafterweise aus Butylkautschuk in Mischung mit Kohlenwasserstoffharzen in Benzin als Lösemittel, und sind beispielsweise erhältlich unter der Bezeichnung DENSOLEN Primer, Denso GmbH, Leverkusen, Deutschland.

Vorzugsweise umfasst die Korrosionsschutzzusammensetzung weiterhin mindestens einen dritten, insbesondere vorvernetzten, Butylkautschuk, mindestens ein Füllmaterial, mindestens ein Antioxidationsmittel, mindestens ein Vernetzungsmittel, mindestens ein Elastomer und/oder mindestens ein Stabilisationsmittel. Die genannten weiteren Bestandteile können allein oder in Kombination der Zusammensetzung zugesetzt sein. Besonders bevorzugt umfasst die Korrosionsschutzzusammensetzung neben dem mindestens einen ersten und dem mindestens einen zweiten Butylkautschuk mindestens ein Füllmaterial, weiter bevorzugt weist die Korrosionsschutzzusammensetzung genau einen ersten Butylkautschuk, genau einen zweiten Butylkautschuk und mindestens ein Füllmaterial auf.

Weiter bevorzugt umfasst die Korrosionsschutzzusammensetzung neben dem mindestens einen ersten und dem mindestens einen zweiten Butylkautschuk mindestens einen dritten, insbesondere vorvernetzten, weiter bevorzugt stark vorvernetzten, Butylkautschuk, sowie noch weiter bevorzugt auch mindestens ein Füllmaterial. Weiter bevorzugt weist die Korrosionsschutzzusammensetzung genau einen ersten Butylkautschuk, genau einen zweiten Butylkautschuk, mindestens ein Füllmaterial auf, noch weiter bevorzugt weist die Korrosionsschutzzusammensetzung genau einen ersten Butylkautschuk, genau einen zweiten Butylkautschuk, genau einen dritten Butylkautschuk und mindestens ein Füllmaterial auf. Der mindestens eine dritte Butylkautschuk weist bevorzugt gemäß ISO 289 in der Version 2005 oder gemäß ASTM 1604-04 eine Mooney-Viskosität ML (1 + 3) bei 127°C in einem Bereich von etwa 30 MU bis etwa 100 MU, bevorzugt von etwa 50 MU bis etwa 95 MU, noch weiter bevorzugt von etwa 60 MU bis etwa 90 MU, noch weiter bevorzugt von etwa 65 MU bis etwa 93 MU, noch weiter bevorzugt in einem Bereich von etwa 78 MU bis etwa 92 MU, und noch weiter bevorzugt von etwa 78 MU bis etwa 90 MU, auf. Die spezifische Dichte des dritten Butylkautschuks liegt bei einer Temperatur von 25°C gemäß ASTM D1875 in der Version von 2003 in einem Bereich von etwa 0,5 bis etwa 1,1, bevorzugt in einem Bereich von etwa 0,9 bis etwa 0,98. Der mindestens eine dritte Butylkautschuk ist vorzugsweise ausgewählt aus einer Gruppe umfassend vorvernetzte Butylkautschuke einschließlich Halobutylkautschuke. Der mindestens eine dritte, insbesondere vorvernetzte, Butylkautschuk ist vorteilhafterweise in einer Menge in einem Bereich von etwa 1 Gew.-% bis etwa 20 Gew.-%, weiter bevorzugt in einer Menge in einem Bereich von etwa 1,5 Gew.-% bis etwa 15 Gew.-%, noch weiter bevorzugt in einer Menge in einem Bereich von etwa 2 Gew.-% bis etwa 10 Gew.-%, jeweils bezogen auf die Gesamtmenge der Zusammensetzung, in der Zusammensetzung vorhanden. Die genannten Kautschuke und das mindestens eine Füllmaterial machen zusammen eine Menge in einem Bereich von etwa 90 Gew.-% bis etwa 99,5 Gew.-% , bevorzugt von etwa 96 Gew.-% bis etwa 99,3 Gew.-%, der Zusammensetzung aus, jeweils bezogen auf die Gesamtmenge der Korrosionsschutzzusammensetzung.

Das von der Korrosionsschutzzusammensetzung umfasste mindestens eine Elastomer ist vorteilhafterweise ausgewählt aus einer Gruppe umfassend Polyisobutylene mit einem Staudinger Index $J_O$ in einem Bereich von etwa 230 $cm^3$/g bis etwa 900 $cm^3$/g, bevorzugt in einem Bereich von etwa 400 $cm^3$/g bis etwa 800 $cm^3$/g, und einer mittleren relativen Molmasse $\overline{M}_v$ (Viskositätsmittel) in einem Bereich von etwa 900 000 g/mol bis etwa 5.500.000 g/mol, bevorzugt mit einer mittleren relativen Molmasse $\overline{M}_v$ in einem Bereich von etwa 2.000.000 g/mol bis etwa 5.000.000 g/mol, noch weiter bevorzugt mit einer mittleren relativen Molmasse $\overline{M}_v$ in einem Bereich von etwa 3.300.000 g/mol bis etwa 4.600.000 g/mol. Der Staudinger Index $J_O$ wurde früher auch als intrinsische Viskosität bezeichnet. Er wird berechnet aus der Flusszeit bei 20 °C durch eine Kapillare eines Ubbelohde-Viskosimeters nach der folgenden Formel (Schulz-Blaschke-Gleichung):

$$J_O = \eta_{sp}/c \, (1+0,31^x\eta_{sp}) \; cm^3/g$$

wobei

$$\eta_{sp} = \frac{t}{t_o} - 1 \text{ (spezifische Viskosität),}$$

wobei t die Fließzeit der Lösung mit einer Hagenbach-Couette Korrektur, to die Fließzeit des Lösemittels mit Hagenbach-Couette Korrektur und c die Konzentration der Lösung in g/cm³ angibt. Die mittlere relative Molmasse $\overline{M}_v$ berechnet sich aus der folgenden Formel:

$$\sqrt[0.65]{\frac{J_o \times 10^2}{3.06}}$$

Elastomere in Form der solchermaßen definierten Polyisobutylene können zusammen mit dem dritten, insbesondere vorvernetzten, Butylkautschuk eingesetzt werden, insbesondere diesen teilweise ersetzen. Es kann aber auch vorgesehen sein, dass anstatt einem dritten, insbesondere vorvernetzten, Butylkautschuk, in derKorrosionsschutzzusammensetzung mindestens ein Polyisobutylen wie vorsteht definiert eingesetzt ist. Das mindestens eine Elastomer in Form mindestens eines Polyisobutylens liegt vorteilhafterweise in einer Menge in einem Bereich von etwa 1 Gew.-% bis etwa 15 Gew.-%, weiter bevorzugt in einer Menge in einem Bereich von etwa 2 Gew.-% bis etwa 10 Gew.-%, jeweils bezogen auf die Gesamtmenge der Zusammensetzung, in der Zusammensetzung vor. Es kann auch vorgesehen sein, Mischungen verschiedener Polyisobutylene mit den vorstehend angegebenen Eigenschaften einzusetzen.

Bevorzugt ist das mindestens eine Füllmaterial in einer Menge in einem Bereich von etwa 10 Gew.-%, bevorzugt von etwa 20 Gew.-%, bis etwa 70 Gew.-%, weiter bevorzugt in einem Bereich von etwa 20 Gew.-% bis etwa 56 Gew.-%, noch weiter bevorzugt in einem Bereich von etwa 25 Gew.-% bis etwa 55 Gew.-%, jeweils bezogen auf die Gesamtmenge der Korrosionsschutzzusammensetzung, in dieser vorhanden. Besonders bevorzugt ist das mindestens eine Füllmaterial pulverförmig oder faserförmig ausgebildet. Besonders bevorzugt umfasst die Zusammensetzung mindestens ein erstes pulverförmiges Füllmaterial und mindestens ein zweites faserförmiges Füllmaterial. Besonders bevorzugt ist bei einer solchen kombinierten Zugabe mindestens eines pulverförmigen und mindestens eines faserförmigen Füllmaterials das faserförmige Füllmaterial in einer sehr geringen Menge, verglichen mit dem pulverförmigen Füllmaterial, der Korrosionsschutzzusammensetzung zugesetzt, bevorzugt in einer Menge in einem Bereich von etwa 0,1 Gew.-% bis etwa 1-Gew.-%, bezogen auf die Gesamtmenge der Korrosionsschutzzusammensetzung.

Bevorzugt ist das mindestens eine Füllmaterial ausgewählt aus einer Gruppe der pulverförmigen mineralischen Füllstoffe oder der mineralischen und/oder organischen faserartigen Füllstoffe, beispielsweise Talkum, Zinkoxid, Wollastonit mit Nadelstruktur, Cellulosefasern o. ä. Er kann ausgewählt sein aus einer Gruppe organischer Fasern wie beispielsweise aus Acrylnitrilfasern mit einer Länge in einem Bereich von etwa 1,5 mm bis etwa 20 mm, weiter bevorzugt mit einer Länge in einem Bereich von etwa 4 mm bis etwa 15 mm, und einer Feinheit in einem Bereich von etwa 0,5 dtex bis etwa 100 dtex, weiter bevorzugt mit einer Feinheit in einem Bereich von etwa 1 dtex bis etwa 20 dtex, jeweils gemessen gemäß ISO 1144 in der Version von 1973. Soweit ein pulverförmiger Füllstoff, insbesondere ein mineralischer pulverförmiger Füllstoff, eingesetzt wird, weist dieser vorteilhafterweise einen Rückstand in % bei einer Siebanalyse gemäß DIN 66165 in der Version 1987-04 bei H-100 (100 $\mu$m) von etwa 1 % bis etwa 5 %, bei H-60 (60 $\mu$m) von etwa 1 % bis etwa 5 % und bei H-30 (30 $\mu$m) in einem Bereich von etwa 1% bis etwa 5 % auf. Vorteilhafterweise weist die Korrosionsschutzzusammensetzung mindestens ein Füllmaterial auf.

Soweit mindestens ein Antioxidationsmittel vorgesehen ist kann dieses, vorzugsweise in einer Mischung verschiedener Antioxidationsmittel, in einer Menge in einem Bereich von etwa 0,1 Gew.-% bis etwa 1 Gew.-%, weiter bevorzugt in einer Menge in einem Bereich von etwa 0,2 Gew.-% bis etwa 0,5 Gew.-%, jeweils bezogen auf die Gesamtmenge der Korrosionsschutzzusammensetzung, in dieser vorhanden sein. Soweit in der Korrosionsschutzzusammensetzung mindestens ein Stabilisationsmittel, das auch als Dispergierhilfsmittel bezeichenbar ist, vorhanden ist, ist dieses vorteilhafterweise ausgewählt aus einer Gruppe umfassend $C_{10}$-bis $C_{24}$-Carbonsäuren und ist vorteilhafterweise Stearinsäure. Das mindestens eine Stabilisationsmittel/Dispergierhilfsmittel ist bevorzugt in einer Menge in einem Bereich von etwa 0,05 Gew.-% bis etwa 0,5 Gew.-% in der Korrosionsschutzzusammensetzung, bezogen auf die Gesamtmenge derselben, vorhanden. Als Stabilisationsmittel/Dispergierhilfsmittel in den vorgenannten Gew.-%-Bereichen können beispielweise auch Metallsalze der angesprochenen Carbonsäuren wie beispielsweise Zinkstearate eingesetzt werden.

Des Weiteren kann die Zusammensetzung noch sonstige Zusätze, die üblich oder notwendig je nach Einsatzzweck sind, aufweisen. Insbesondere kann die Korrosionsschutzzusammensetzung weiterhin mindestens ein Flammschutzmittel, mindestens ein Vernetzungsmittel und/oder mindestens ein weiteres Elastomer neben dem oben beschriebenen aufweisen. Soweit ein Flammschutzmittel vorgesehen ist, ist dieses vorteilhafterweise in einer Menge in einem Bereich von etwa 0,02 Gew.-% bis etwa 2 Gew.-%, bezogen auf die Gesamtmenge der Korrosionsschutzzusammensetzung, in selbiger zugegen.

Soweit die Korrosionsschutzzusammensetzung mindestens ein Vernetzungsmittel aufweist, ist dieses vorteilhafterweise in einer Menge in einem Bereich von etwa 0,1 Gew.-% bis etwa 10 Gew.-%, weiter bevorzugt in einer Menge in einem Bereich von etwa 0,2 Gew.-% bis etwa 8 Gew.-%, bezogen auf die Gesamtmenge der Korrosionsschutzzusammensetzung, in dieser vorhanden. Das Vernetzungsmittel ist insbesondere dann vorgesehen, wenn die Korrosionsschutzzusammensetzung Bestandteil eines ein- oder mehrlagigen Bandes, insbesondere eines Wickelbandes für Rohre gleich welcher Art, insbesondere Pipelines, ist. Es kann jedoch auch zugegen sein, wenn die Korrosionsschutzzusammensetzung als Streich- bzw. Spachtelmasse ausgebildet ist. Das mindestens eine Vernetzungsmittel ist vorteilhafterweise ausgewählt aus einer Gruppe umfassend mindestens ein Phenolharz. Phenolharze werden über Vernetzungsreaktionen zu Duroplasten, den sogenannten Phenoplasten, nachgehärtet. Eine derartige Vernetzungsreaktion kann in der Korrosionsschutzzusammensetzung stattfinden. Phenolharze sind Kondensationsprodukte von Phenol mit Aldehyden, vorzugsweise mit Formaldehyd. Im Sinne der vorliegenden Erfindung ist besonders bevorzugt von der Korrosionsschutzzusammensetzung umfasst mindestens ein Phenolharz, welches Hydroxymethyl-Gruppen aufweist. Diese Hydroxymethyl-Gruppen stellen die reaktiven bzw. funktionellen Gruppen dar, über welche eine Vernetzungsreaktion, die auch als Selbsthärtungsreaktion angesprochen werden kann, mit den funktionellen Gruppen, d. h. den Kohlenstoff-Kohlenstoff-Doppelbindungen, des mindestens einen ersten und/oder mindestens einen zweiten Butylkautschuks oder aber des weiter zugesetzten Elastomers bzw. vorvernetzten Butylkautschuks erfolgt. Besonders bevorzugt im Sinne der vorliegenden Erfindung ist das mindestens eine Phenolharz hergestellt aus mindestens einem Phenol oder dessen Derivaten und mindestens einem Aldehyd, ausgewählt aus einer Gruppe umfassend Formaldehyd, Acetaldehyd, Benzaldehyd und/oder Acrolein, wobei besonders bevorzugt Formaldehyd eingesetzt ist. Als Phenolderivate werden insbesondere tetra-Butylphenol, Nonylphenol oder Octylphenol eingesetzt, wobei aber auch Aryl-Derivate, insbesondere Phenylphenol, als auch zweiwertige Phenole wie Resorcin oder Bisphenol A oder Naphthole eingesetzt werden können. Besonders bevorzugt sind Octylphenol-Formaldehyd-Harze. Phenolharze als Vernetzungsmittel sind insbesondere solche, die in die Klasse der sogenannten Resole fallen, d. h. durch eine basisch katalysierte Reaktion der genannten Ausgangsprodukte hergestellt werden.

In Überlappungsbereichen bei Wicklung eines mindestens zweischichtigen Bandes, welches mindestens eine Schicht der Korrosionsschutzzusammensetzung als äußere Schicht aufweist, kommt die mindestens eine Schicht der Korrosionsschutzzusammensetzung in Berührung mit der weiteren Schicht. Diese weitere Schicht, beispielsweise eine Haftvermittlerschicht, kann dabei vorteilhafterweise Katalysatormittel aufweisen, welche die Vernetzungsreaktion beschleunigen, insbesondere bei niedrigen Temperaturen, beispielsweise Raumtemperatur von 23°C. Geeignete Katalysatormittel sind ausgewählt aus einer Gruppe umfassend mindestens ein Zinkchlorid, Zinkbromid, Eisenchlorid, Antimonchlorid, Antimonbromid, Zinnbromid, Germaniumchlorid, Kobaltbromid, Nickelchlorid und/oder organische Salze des Zinn oder Zink, wie beispielsweise Zinkstearate oder Zinkoleate, wobei besonders bevorzugt Zinn- oder Zinkhalogenide, und weiter bevorzugt Zinnchlorid und Zinkchlorid, allein oder in Mischung, eingesetzt werden. Das Katalysatormittel ist in dieser weiteren Schicht eines Bandes, die bevorzugt die Korrosionsschutzzusammensetzung nicht enthält, vorteilhafterweise in einer Menge in einem Bereich von etwa 0,1 Gew.-% bis etwa 5 Gew.-%, weiter bevorzugt in einer Menge in einem Bereich von etwa 0,15 Gew.-% bis etwa 4,5 Gew.-%, und noch weiter bevorzugt in einer Menge in einem Bereich von etwa 0,2 Gew.-% bis etwa 4 Gew.-%, bezogen jeweils auf die Gesamtmenge dieser weiteren Schicht, in dieser enthalten.

Wird ein Katalysatormittel vorgesehen, kann vorzugsweise in dem Material, welches dieses umfasst, mindestens ein Co-Reagenz vorgesehen sein, ausgewählt aus einer Gruppe umfassend Divinylfumarat, Divinyladipat und Triallyl-Trichlorbenzol, wobei besonders bevorzugt ein Triallyl-Trichlorbenzol ausgewählt ist. Das Co-Reagenz dient insbesondere der Verträglichmachung des eingesetzten Katalysatormittels in dem Material, in welchem der Katalysator enthalten ist. Das Co-Reagenz ist in dem Material, in dem das Katalysatormittel enthalten ist, vorteilhafterweise in einer Menge in einem Bereich von etwa 0,5 Gew. % bis etwa 5 Gew. %, weiter bevorzugt in einer Menge in einem Bereich von etwa 2 Gew. % bis etwa 4,5 Gew. %, bezogen auf die Gesamtmenge des Katalysatormittel enthaltenden Materials, enthalten.

Das mindestens eine weitere Elastomer ist vorteilhafterweise ausgewählt aus einer Gruppe umfassend mindestens einen Ethylen-Propylen-Dien-Kautschuk. Hierunter werden insbesondere solche Co- oder Block-Co-Polymere als auch Terpolymere verstanden, welche als funktionelle Gruppen eine Kohlenstoff-Kohlenstoff-Doppelbindung aufweisen. Auch hiervon können Gemische eingesetzt werden. Besonders bevorzugt sind dabei Terpolymere, die aus einer Polymerisationsreaktion mit Ethylen, Propylen und einem Dien entstehen. Diese werden auch EPDM-Terpolymere genannt und vereinigen ein gesättigtes Polymerrückgrat mit ungesättigten Resten in Seitengruppen. Besonders bevorzugt im Sinne der vorliegenden Erfindung werden dabei 5-Ethyliden-2-Norbornen, Dicyclopentadien und/oder 5-Vinyliden-2-Norbornen als Dien eingesetzt, und zwar in Mengen bis zu etwa 15 Gew.-%, bevorzugt in Mengen in einem Bereich von etwa 0,3 Gew.-% bis etwa 12 Gew.-%. Im Falle des Einsatzes von 5-Ethyliden-2-Norbornen werden vorzugsweise Mengen in einem Bereich von etwa 4 Gew.-% bis etwa 11 Gew.-% und im Falle eines Einsatzes von Dicyclopentadien Mengen in einem Bereich von etwa 1,0 Gew.-% bis etwa 6,0 Gew.-% eingesetzt. Die vorstehenden Gew.-%-Angaben sind dabei bezogen auf die Gesamtmenge der Monomere, die in einer Polymerisation zu einem EPDM bzw. Ethylen-Propylen-Kautschuk eingesetzt sind.

Die Korrosionsschutzzusammensetzung kann weiterhin mindestens einen Tackifier, insbesondere ein Kohlenwasserstoffharz, in einer Menge in einem Bereich von etwa 5 Gew.-% bis etwa 25 Gew.-%, weiter bevorzugt in einer Menge in einem Bereich von etwa 8 Gew.-% bis etwa 20 Gew.-%, jeweils bezogen auf die Gesamtmenge der Korrosionsschutzzusammensetzung, aufweisen.

Besonders bevorzugt umfasst die Korrosionsschutzzusammensetzung mindestens einen ersten depolymerisierten Butylkautschuk in flüssiger Form bei 23°C in einer Menge in einem Bereich von etwa 22 Gew.-% bis etwa 50 Gew.-%, mindestens einen zweiten Butylkautschuk, der vorzugsweise in fester Form bei 23°C vorliegt, in einer Menge in einem Bereich von etwa 4 Gew.-% bis etwa 30 Gew.-%, mindestens einen dritten vorvernetzten Butylkautschuk, der vorzugsweise in fester Form bei 23°C vorliegt, in einer Menge in einem Bereich von etwa 1 Gew.-% bis etwa 10 Gew.-%, mindestens ein Antioxidationsmittel in einer Menge in einem Bereich von etwa 0,2 Gew.-% bis etwa 0,6 Gew.-%, mindestens ein Füllmaterial, vorzugsweise ein mineralisches Füllmaterial in Pulverform oder aber ein organisches Füllmaterial in Faserform oder Kombinationen hiervon, in einer Menge in einem Bereich von etwa 10 Gew.-% bis etwa 50 Gew.-%, sowie ggf. etwa 0,1 Gew.-% bis etwa 0,5 Gew.-% mindestens eines Stabilisationsmittels/Dispergierhilfsmittels. Die vorstehend genannten Gew.-%-Angaben sind jeweils bezogen auf die Gesamtmenge der genannten Korrosionsschutzzusammensetzung.

Besonders bevorzugt umfasst die Korrosionsschutzzusammensetzung mindestens einen ersten depolymerisierten Butylkautschuk in flüssiger Form bei 23°C in einer Menge in einem Bereich von etwa 22 Gew.-% bis etwa 50 Gew.-%, mindestens einen zweiten Butylkautschuk, der vorzugsweise in fester Form bei 23°C vorliegt, in einer Menge in einem Bereich von etwa 4 Gew.-% bis etwa 30 Gew.-%, mindestens ein Elastomer in Form eines Polyisobutylens mit einer mittleren relativen Molmasse $\overline{M}_v$ in einem Bereich von etwa 3.000.000 g/mol bis etwa 5.000.000 g/mol in einer Menge in einem Bereich von etwa 2 Gew.-% bis etwa 10 Gew.-%, mindestens ein Antioxidationsmittel in einer Menge in einem Bereich von etwa 0,1 Gew.-% bis etwa 0,5 Gew.-%, mindestens ein Füllmaterial, vorzugsweise ein mineralisches Füllmaterial in Pulverform und/oder ein organisches oder mineralisches Füllmaterial in Faser-oder Nadelform, in einer Menge in einem Bereich von etwa 15 Gew.-% bis etwa 45 Gew.-%, sowie gegebenenfalls etwa 0,05 Gew.-% bis etwa 0,5 Gew.-% mindestens eines Stabilisationsmittels/Dispergierhilfsmittels. Die vorstehend genannten Gew.-% Angaben sind jeweils bezogen auf die Gesamtmenge der genannten Korrosionsschutzzusammensetzung

Soweit in der vorliegenden Erfindung der Begriff "etwa" in Bezug auf Werte, Wertbereiche oder werthaltige Begriffe verwendet wird, ist hierunter dasjenige zu verstehen, was der Fachmann in dem gegebenen Zusammenhang als fachmännisch üblich ansehen wird. Insbesondere sind Abweichungen der angegebenen Werte, Wertbereiche oder werthaltigen Begriffe von +/- 10 %, bevorzugt +/- 5 %, von dem Begriff "etwa" umfasst.

Besonders bevorzugt liegt die Korrosionsschutzzusammensetzung in Bandform vor. Besonders bevorzugt ist das Band mindestens einlagig aufgebaut, weiter bevorzugt ist es mindestens zweilagig aufgebaut, kann aber auch drei-, vier-, fünf- oder sonst wie mehrlagig ausgebildet sein. So kann dieses beispielsweise derart aufgebaut sein, dass es zwei äußere Lagen umfassend die Korrosionsschutzzusammensetzung aufweist, welche eine innere Lage, gebildet aus einer Trägerfolie, insbesondere einer solchen hergestellt aus mindestens einem Polyethylen und/oder Polypropylen, bevorzugt aus einem Polyethylen, umfassen. Dabei kann die Trägerfolie, die je nach Stärke auch als Streckbremse wirken kann, auf einer oder beiden Seiten derselben, die den Schichten aus der Korrosionsschutzzusammensetzung zugewandt sind, eine Haftvermittlungsschicht aufweisen.

Es kann auch vorgesehen sein, dass das Band nur eine einzige Lage aus der Korrosionsschutzzusammensetzung aufweist, welche mit einer Trägerfolie, insbesondere einer solchen, wie vorstehend definiert, verbunden ist, wobei die Trägerfolie auf einer oder beiden Seiten eine Haftvermittlungsschicht aufweisen kann. Bei einem solchen Aufbau weist die Trägerfolie, die dann in erster Linie einer Stabilisierung der Lage aus der Korrosionsschutzzusammensetzung dient, eine gewisse Stärke, bevorzugt in einem Bereich von etwa 0,2 mm bis etwa 1,2 mm, weiter bevorzugt etwa 0,3 mm bis etwa 0,7 mm, auf. Weiter bevorzugt weist die Trägerfolie auf ihren beiden Außenseiten Haftvermittlungsschichten mit gleichen oder unterschiedlichen Zusammensetzungen auf. So kann die Trägerfolie auf ihrer der aus der Korrosionsschutzzusammensetzung gebildeten Lage zugewandten Seite vorzugsweise eine Haftvermittlungsschicht aufweisen, die aus dem gleichen Material wie die Trägerfolie und dem mindestens einen ersten und/oder mindestens einen zweiten Butylkautschuk der Lage aus der Korrosionsschutzzusammensetzung, bevorzugt ausschließlich aus den vorgenannten Materialien, gebildet ist. Die weitere Haftvermittlungsschicht, die auf der der Lage aus der Korrosionsschutzzusammensetzung abgewandten Seite der Trägerfolie aufgebracht ist, kann hingegen, insbesondere bei Vorsehung eines mindestens einlagigen zweiten Bandes, welches insbesondere als ein einen mechanischen Schutz vermittelndes Band um das Band mit der Korrosionsschutzzusammensetzung auf dem betreffenden Produkt wickelbar ist, neben mindestens einem ersten und/oder mindestens einem zweiten Butylkautschuk gemäß der Zusammensetzung und dem Material der Trägerfolie, insbesondere einem Polyethylen und/oder Polypropylen, auch Tackifier, insbesondere in Form von Kohlenwasserstoffharzen, sowie Antioxidantien und insbesondere die vorstehend bereits angesprochenen Katalysatoren und/oder Co-Reagenzien für diese aufweisen. Das Katalysatormittel und/oder Co-Reagenz kann dabei insbesondere bei höheren Temperaturen, insbesondere solchen ab etwa 50°C, bevorzugt solchen in einem Bereich von etwa 55°C bis etwa 220°C, weiter bevorzugt in einem Bereich von etwa 60°C bis etwa 140°C, die Vernetzungsreaktion in dem mindestens einen ersten und/oder mindestens einen zweiten Butylkautschuk, ggf. auch dem weiterhin vorhandenen Elastomer und/oder vorvernetztem Butylkautschuk, wie vorstehend beschrieben, initiieren. Das Katalysatormittel, einzeln oder in Mischung, ist in der äußeren Haftvermittlungsschicht vorzugsweise in einer Menge in einem Bereich von etwa 0,1 Gew.-% bis etwa 10 Gew.-%, bevorzugt in einem Bereich von etwa 0,15 Gew.-% bis etwa 4 Gew.-%, jeweils bezogen auf die Gesamtmenge der äußeren Haftvermittlungsschicht, umfasst. Bei Wicklung oder Aufbringung des Bandes mit mindestens einer Lage aus der Korrosionsschutzzusammensetzung auf rohrförmigen oder sonstigen Gegenständen mit einer Überlappung kann dann bei Vorsehung von mindestens einem Katalysatormittel in der äußeren Haftvermittlungsschicht eine Vernetzung, bevorzugt bei erhöhten Temperaturen, im Überlappungsbereich initiiert werden, so dass ein festerer Halt, insbesondere ohne Faltenbildung, im Überlappungsbereich erzielbar ist.

Das Band mit der Korrosionsschutzzusammensetzung kann insbesondere symmetrisch oder aber asymmetrisch aufgebaut sein. Ein symmetrisch aufgebautes Band weist, wie vorstehend schon beschrieben, eine Trägerfolie beispielsweise aus mindestens einem Polyethylen und/oder Polypropylen auf, welche auf ihren beiden Außenseiten umschlossen ist von jeweils einer Lage, die aus der Korrosionsschutzzusammensetzung gebildet ist. Beide äußeren Lagen weisen dabei vorzugsweise in etwa die gleiche Dicke auf. Zwischen Trägerfolie und der die Korrosionsschutzzusammensetzung aufweisenden Lagen kann dabei mindestens eine Haftvermittlungsschicht vorgesehen sein, wie ebenfalls vorstehend beschrieben. Ist die Haftvermittlungsschicht auf beiden Seiten der Trägerfolie angeordnet, weist diese ebenfalls in etwa die gleiche Stärke auf. Dann spricht man von einem symmetrisch aufgebauten 3- bzw. 5-Schichten-Band, zählt man die Haftvermittlungsschichten im letztgenannten Fall mit.

Es kann vorgesehen sein, ein asymmetrisch aufgebautes Band zur Verfügung zu stellen. Dieses kann beispielsweise derart aufgebaut sein, dass eine Lage, die aus der Korrosionsschutzzusammensetzung gebildet ist und die dem abzudeckenden Produkt zugewandt wird, verbunden ist mit einer Trägerfolie, wie vorstehend definiert. Dabei kann zwischen der die Korrosionsschutzzusammensetzung aufweisenden Lage und der Trägerfolie mindestens eine Haftvermittlungsschicht angeordnet sein. Auf der der Lage aus der Korrosionsschutzzusammensetzung abgewandten Seite der Trägerfolie kann auch beispielsweise nochmalig eine Lage aus der Korrosionsschutzzusammensetzung vorgesehen sein, welche eine geringere Stärke als die dem zu umhüllenden Produkt zugewandte Lage aufweist. Auch kann die Trägerfolie auf der der Lage aus der Korrosionsschutzzusammensetzung abgewandten Seite eine weitere Haftvermittlungsschicht aufweisen, die vorzugsweise ebenfalls mindestens einen ersten und/oder mindestens einen zweiten Butylkautschuk als auch das Material der Trägerfolie umfasst, und weiterhin bevorzugt zusätzlich Tackifier wie Kohlenwasserstoffharze, Katalysatormittel, Co-Reagenzien und sonstige Additive, wie vorstehend bereits beschrieben.

Im Sinne der vorliegenden Erfindung kann auch vorgesehen sein, dass das Band mit einer Lage aus der Korrosionsschutzzusammensetzung mindestens eine Lage einer Streckbremse umfasst. Dabei kann das Band beispielsweise derart ausgestaltet sein, dass dieses aus einer einzigen Lage aus der Korrosionsschutzzusammensetzung besteht, wobei in etwa mittig eine sehr dünne Zwischenlage, bevorzugt eine solche mit einer Stärke in einem Bereich von etwa 15 $\mu$m bis etwa 100 $\mu$m, weiter bevorzugt in einem Bereich von etwa 20 $\mu$m bis etwa 75 $\mu$m, eingebracht ist. Diese Zwischenlage dient als Streckbremse und verhindert eine Überdehnung des Bandes, insbesondere bei einer spiralförmigen Wicklung desselben, um ein zu umhüllendes Produkt, beispielsweise eine Pipeline. Besonders bevorzugt ist die Streckbremse bzw. die Zwischenlage gebildet aus mindestens einem Polyethylen und/oder Polypropylen und ist besonders bevorzugt eine Polyethylen-Folie, insbesondere aus einem LDPE oder LLDPE. Eine solchermaßen mit einer Streckbremse versehene Lage aus der Korrosionsschutzzusammensetzung kann auch als zwei- oder alternativ als dreilagig angesprochen werden. Die Streckbremse kann dabei symmetrisch etwa in der Mitte, aber auch asymmetrisch verschoben zu der Oberseite oder Unterseite des Bandes in diesem angeordnet sein. Bevorzugt erfolgt jedoch eine symmetrische Anordnung etwa in der Mitte, d. h. bei halber Stärke des Bandes, soweit dieses ansonsten ausschließlich eine Lage umfasst, die aus der Korrosionsschutzzusammensetzung gebildet ist. Wie bereits schon vorstehend beschrieben kann jedoch auch vorgesehen sein, dass oberhalb der Streckbremse auf derjenigen Seite des Bandes, welche dem abzudeckenden Produkt abgewandt ist, eine weitere Lage angeordnet ist, die beispielweise ein Katalysatormittel aufweist, beispielsweise eine Haftvermittlungsschicht. In diesem Fall liegt ein echtes dreilagiges Band vor.

Die vorstehend angesprochenen Haftvermittlungsschichten weisen bevorzugt den mindestens einen zweiten und/oder mindestens einen dritten Butylkautschuk, alternativ zu diesem oder diesen teilweise ersetzend mindestens ein Polyisobutylen wie vorstehend definiert, der Korrosionsschutzzusammensetzung und mindestens ein Polyethylen und/oder Polypropylen auf. Besonders bevorzugt weisen diese mindestens einen zweiten oder mindestens einen dritten Butylkautschuk oder das genannte Polyisobutylen, bevorzugt mindestens einen zweiten Butylkautschuk, noch weiter bevorzugt genau einen zweiten Butylkautschuk oder eine Mischung eines zweiten und dritten Butylkautschuks oder alternativ eine Mischung eines zweiten Butylkautschuk und mindestens eines Polyisobutylens auf, wobei die Menge des eingesetzten mindestens einen zweiten und/oder dritten Butylkautschuks bzw. Polyisobutylens in einem Bereich von etwa 35 Gew.-% bis etwa 65 Gew.-%, weiter bevorzugt in einem Bereich von etwa 40 Gew.-% bis etwa 60 Gew.-%, jeweils bezogen auf die Gesamtmenge der Haftvermittlungsschicht, liegt. Das mindestens eine Polyethylen und/oder Polypropylen, bevorzugt mindestens ein Polyethylen, insbesondere ein LPDE oder LLDPE weiter bevorzugt genau ein Polyethylen, ist in der Haftvermittlungsschicht zugegen in einer Menge in einem Bereich von etwa 25 Gew.-% bis etwa 65 Gew.-%, weiter bevorzugt in einer Menge in einem Bereich von etwa 30 Gew.-% bis etwa 60 Gew.-%, jeweils bezogen auf die Gesamtmenge der Haftvermittlungsschicht. Eine Zusammensetzung einer Haftvermittlungsschicht umfasst dabei ausschließlich den mindestens einen zweiten und/oder mindestens einen dritten Butylkautschuk und das mindestens eine Polyethylen und/oder Polypropylen, bevorzugt genau einen zweiten Butylkautschuk und genau ein Polyethylen, und ansonsten keine weiteren Zusätze.

Eine weitere Zusammensetzung einer Haftvermittlungsschicht umfasst neben dem mindestens einen zweiten und/oder mindestens einen dritten Butylkautschuk bzw. mindestens ein Polyisobutylen und dem mindestens einen Polyethylen und/oder Polypropylen weitere Additive, und zwar bevorzugt Tackifier, Antioxidantien, Katalysatormittel, Co-Reagenzien, wie insbesondere oben beschrieben, als auch Farbpigmente. Dabei kann beispielsweise ein Tackifier in einer Menge in einem Bereich von etwa 5 Gew.-% bis etwa 15 Gew.-%, weiter bevorzugt in einer Menge in einem Bereich von etwa 7 Gew.-% bis etwa 13 Gew.-%, zugegen sein, und ist vorzugsweise ausgewählt aus einer Gruppe umfassend Kohlenwasserstoffharze. Darüber hinaus kann mindestens ein Antioxidationsmittel vorgesehen sein, bevorzugt in einer Menge in einem Bereich von etwa 0,05 Gew.-% bis etwa 0,5 Gew.-%, weiter bevorzugt in einer Menge von etwa 0,1 Gew.-% bis etwa 0,5 Gew.-%. Das Antioxidationsmittel kann dabei insbesondere ausgewählt sein aus einer Gruppe umfassend sterisch gehinderte Phenole, wie beispielsweise Pentaerythriol-Tetrakis (3-(3,5-di-ter-butyl-4-Hydroxyphenyl) Propionat). Daneben kann die Haftvermittlungsschicht auch mindestens ein Pigment aufweisen, insbesondere ein solches, welches in Form eines Masterbatches vorliegt. Das mindestens eine Pigment ist in einer Menge in einem Bereich von etwa 0,5 Gew.-% bis etwa 3 Gew.-%, weiter bevorzugt in einer Menge in einem Bereich von etwa 0,9 Gew.-% bis etwa 2 Gew.-%, in einer Zusammensetzung der Haftvermittlungsschicht vorhanden. Die vorgenannten Gew.-%-Angaben betreffend den Tackifier, das Antioxidationsmittel und das Pigment beziehen sich jeweils auf die Gesamtmenge der Haftvermittlungsschicht. Das Pigment kann beispielsweise ein Schwarzpigment sein, um dem Band einen einheitlichen Gesamteindruck zu vermitteln. Es kann jedoch auch zur Hervorhebung und Kenntlichmachung des Vorhandenseins einer Haftvermittlungsschicht ein jedwedes anderes Pigment, beispielsweise ein rotfarbiges, eingesetzt werden. Die Haftvermittlungsschicht hat vorzugsweise eine Stärke in einem Bereich von etwa 10 $\mu$m bis etwa 150 $\mu$m, weiter bevorzugt eine Stärke in einem Bereich von etwa 20 $\mu$m bis etwa 100 $\mu$m, noch weiter bevorzugt eine Stärke in einem Bereich von etwa 25 $\mu$m bis etwa 80 $\mu$m.

Die Trägerfolie, soweit sie nicht als Streckbremse ausgestaltet ist, weist vorteilhafterweise eine Stärke in einem Bereich von etwa 0,2 mm bis etwa 1,2 mm, weiter bevorzugt eine Stärke in einem Bereich von etwa 0,3 mm bis etwa 0,8 mm, auf. Die Trägerfolie besteht vorteilhafterweise aus Polyethylen oder Polypropylen, und besteht bevorzugt aus einem Polyethylen. Besonders bevorzugt ist die Trägerfolie ausgebildet aus einer Gruppe umfassend Polyethylene, die elektronenstrahlvernetzbar sind. Wird die Trägerfolie mit Haftvermittlungsschichten eingesetzt, ist in den Haftvermittlungsschichten ebenfalls ein Polyethylen eingesetzt, welches elektronenstrahlvernetzbar ist, bevorzugt das gleiche Polyethylen, wie dieses auch in der Trägerfolie vorhanden ist. Weiter vorteilhafterweise ist die Trägerfolie einer leichten Reckung unterzogen worden, so dass vorteilhafterweise eine Schrumpfneigung bei Erwärmung derselben entsteht und eine mögliche Längenausdehnung bei Erwärmung überkompensiert werden kann. Zudem wird bei einer Anwendung in Form einer Umwicklung rohrförmiger Gegenstände dann auch die Anpresskraft in Richtung auf den rohrförmigen Gegenstand verstärkt.

Weist die Trägerfolie auf einer oder auf beiden Seiten eine Haftvermittlungsschicht auf, so wird der gesamte Verbund bevorzugt einer leichten Reckung unterzogen. Ein derartig hergestellter Folienverbund wird dann nachfolgend mit der Korrosionsschutzzusammensetzung auf mindestens einer Seite beschichtet. Diese Schicht weist vorteilhafterweise eine Stärke in einem Bereich von etwa 0,25 mm bis etwa 2,0 mm, weiter bevorzugt eine Stärke in einem Bereich von etwa 0,35 mm bis etwa 1,3 mm auf. Wird die Trägerfolie auf beiden Seiten mit einer Haftvermittlungsschicht versehen und ist die Trägerfolie nur auf einer Seite mit der Korrosionsschutzzusammensetzung beschichtet, weist die äußere Haftvermittlungsschicht vorteilhafterweise Katalysatoren auf, ggf. auch Co-Reagenzien hierfür, wie vorstehend beschrieben. Die Zusammensetzung der auf beiden Seiten der Trägerfolie angeordneten Haftvermittlungsschichten kann damit besonders bevorzugt im Sinne der vorliegenden Erfindung unterschiedlich sein. Der vorstehend beschriebene Bandaufbau weist den Vorteil auf, dass einerseits im Überlappungsbereich bei Umhüllung oder Aufbringung eines solchen Bandes durch das vorgesehene Katalysatormittel ebenfalls eine Vernetzungsreaktion initiiert wird, und darüber hinaus, gleich ob mit Überlappung aufgebracht oder nicht, das Band z. B. von einem identischen weiteren Band umwickelt werden kann, wobei dann das in der äußeren Haftvermittlungsschicht vorhandene mindestens eine Katalysatormittel die Vernetzung des diesem zugewandten, die Korrosionsschutzzusammensetzung aufweisenden Teiles des weiteren Bandes initiiert. Die Trägerfolie kann dabei noch weitere Additive umfassen, beispielweise Pigmente, Antioxidationsmittel oder Stabilisatormittel/Dispergierhilfmittel. In einer weiteren Ausgestaltung der vorliegenden Erfindung kann die Korrosionsschutzzusammensetzung auch auf einer Seite einer Schrumpfmanschette oder eines Schrumpfbandes aufgebracht sein. Zusätzlich zu der Vermittlung einer guten Haftung durch Vernetzung aufgrund der spezifischen Zusammensetzung der Korrosionsschutzzusammensetzung kann aufgrund der für die Schrumpfung erforderlichen Erwärmung der Schrumpfmanschette bzw. des Schrumpfbandes eine weitergehende thermische Aktivierung der Korrosionsschutzzusammensetzung erfolgen, so dass die Vernetzungsreaktion gefördert wird und ein noch festerer Halt eines solchen Systems auf insbesondere einem rohrförmigen Gegenstand ermöglicht ist.

Zusätzlich zu dem vorstehend geschilderten mindestens einlagigen Band mit der Korrosionsschutzzusammensetzung kann ein zweites Band zur Vermittlung eines mechanischen Schutzes vorgesehen sein. Das zweite Band ist mindestens einlagig aufgebaut, und ist bevorzugt ein-, zwei- oder dreilagig aufgebaut. Es kann jedoch auch vier- oder sonst wie höherlagig aufgebaut sein. Das zweite Band ist als mechanisches Schutzband anzusprechen. Das zweite Band umfasst bevorzugt eine Lage aus mindestens einem Polyethylen und/oder Polypropylen, bevorzugt mindestens einem Polyethylen, bevorzugt elektronenstrahlvernetzbares Polyethylen, ausreichender Stärke. Soweit Polyethylen eingesetzt wird, weist dieses vorzugsweise eine Reißdehnung gemäß EN ISO 527 in der Version 2012-06 von > 300 %, weiter bevorzugt > 400 %, noch weiter bevorzugt > 500 %, bevorzugt eine solche in einem Bereich von etwa 300 % bis etwa 800 %, auf. Weiter bevorzugt weist es eine Zugspannung gemäß EN ISO 527 in der Version 2012-06 in einem Bereich von etwa 8 bis etwa 25 MPa, weiter bevorzugt in einem Bereich von etwa 12 bis etwa 20 MPa, auf. Das zweite Band kann beispielsweise auch eingesetzt werden, um zwei identische Bänder mit der Korrosionsschutzzusammensetzung um einen rohrförmigen Gegenstand zu umwickeln. Die Identität der vorstehend genannten Bänder mit der Korrosionsschutzzusammensetzung besteht vorteilhafterweise in einem identischen Aufbau und/oder identischer chemischer Zusammensetzung.

Die mindestens eine Lage aus Polyethylen und/oder Polypropylen, bevorzugt genau eine Lage, des zweiten Bandes kann auf einer Seite mit einer Klebeschicht versehen sein. Es kann jedoch auch vorgesehen sein, dass diese auf einer Seite mit einer Klebeschicht aus mindestens einem ersten und/oder mindestens einem zweiten Butylkautschuk gemäß der Korrosionsschutzzusammensetzung gebildet ist. Diese Schicht kann neben dem mindestens einen ersten und/oder mindestens einem zweiten Butylkautschuk noch weitere Additive wie Antioxidationsmittel, Kohlenwasserstoffharz als Tackifier, Prozessöle als Weichmacher, Pigmente o. ä. umfassen. Soweit eine Kleberschicht, wie vorstehend beschrieben, mit der Lage aus mindestens einem Polyethylen und/oder Polypropylen verbunden wird, wird dabei vorzugsweise für das zweite Band vorgesehen, dass zwischen diesen beiden Lagen eine Schicht zur Erzielung einer hinreichenden Haftung vorgesehen ist, wobei diese eine Zusammensetzung aufweisen kann, wie diese im Zusammenhang mit dem Band mit der Korrosionsschutzzusammensetzung weiter oben beschrieben ist.

Darüber hinaus kann weiterhin noch eine Rohrschutzmatte vorgesehen sein, welche um das mindestens eine Band mit mindestens einer Lage aus der Korrosionsschutzzusammensetzung, ggf. auch in Kombination mit einem zweiten Band, welches als Abdeck- und Schutzband dient, angeordnet ist, wodurch eine vorteilhafte, insbesondere lastverteilende Wirkung auf die unter der Rohrschutzmatte liegende Umhüllung aus dem mindestens einen Band vermittelt wird.

Mit der Korrosionsschutzzusammensetzung kann jedwedes Produkt, welches korrodieren kann, erfindungsgemäß geschützt werden, insbesondere durch Abdeckung bei Vorliegen in Band- oder Matten-(Folien)-Form oder aber Verstreichen und Verspachteln der Masse zu Bildung einer Beschichtung. Erfindungsgemäß wird die Korrosionsschutzzusammensetzung für Rohre und Anlagen mit Rohren eingesetzt. Insbesondere wird die Korrosionsschutzzusammensetzung eingesetzt für die Umhüllung von Pipelines gleich welcher Art, aber auch zur Umhüllung von Gasleitungen etc. Sie kann erfindungsgemäß auch eingesetzt werden für sonstige technische Anlagen und/oder in Bereichen, in welchen Korrosion auftreten kann, und dabei nicht nur in Form einer Wicklung, sondern auch z. B. in Form einer Auflage/Abdeckung, das Vorstehende bei Ausbildung als mindestens einlagiges Band oder mindestens einlagige Matte, oder aber in Form einer Beschichtung aus einer streichfähigen bzw. spachtelfähigen Masse der Korrosionsschutzzusammensetzung.

Die vorliegende Erfindung betrifft die Verwendung der Korrosionsschutzzusammensetzung wie weiter vorstehend beschrieben zum Schutz von Rohren und Rohre umfassenden Anlagen sowie sonstigen Anlagen und Einbauten vor Korrosion. Des Weiteren betrifft die vorliegende Erfindung auch ein Verfahren zur Erzielung eines Korrosionsschutzes auf Rohren und Rohre umfassenden Anlagen sowie sonstigen Anlagen und Einbauten durch Aufbringung der Korrosionsschutzzusammensetzung. Besonders bevorzugt bei dem Verfahren wird mindestens ein einschichtiges Band, umfassend die Korrosionsschutzzusammensetzung, um Rohre bzw. Rohre umfassende Anlagen gewickelt. Und schließlich betrifft die vorliegende Erfindung ein mindestens einschichtiges Wickelband, umfassend die Korrosionsschutzzusammensetzung wie vorstehend beschrieben.

Die vorliegende Erfindung wird anhand der nachfolgenden Beispiele näher erläutert. Es sei an dieser Stelle vorausgeschickt, dass die in den Beispielen angegebenen Merkmale solche sind, die mit sämtlichen einzeln oder miteinander in der allgemeinen Beschreibung beschriebenen Merkmalen kombinierbar sind. Insbesondere ist die Zusammensetzung der Korrosionsschutzzusammensetzung in Bandform nur eine beispielhafte.

Es wurden insgesamt fünf Vergleichszusammensetzungen 1 bis 5 und zehn Korrosionsschutzzusammensetzungen 6 bis 16 hergestellt, wobei deren genaue Zusammensetzung der nachfolgenden Tabelle entnommen werden kann, in der sogleich auch die Schälfestigkeiten/Schälwiderstände, bestimmt gemäß DIN EN 12068 in der Version 1999-03, angegeben sind.

| Zusammensetzung Nr. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Flüssiges Polyisobutylen | 20 | 26,1 | 19 | 19 | 20 | | | | | | | | | | | |
| Depolymerisierter (erster) Butylkautschuk | | | | | | 45 | 44,7 | 43,3 | 40,1 | 28,5 | 39,7 | 36,1 | 38,1 | 39,6 | 39,1 | 40 |
| Fester (zweiter) Butylkautschuk | 10 | 17,4 | 9,5 | 10 | 10 | 5 | 5 | 8 | 14,8 | 28,5 | 20 | 27,2 | 26,3 | 22,6 | 22,3 | 20 |
| Weichmacher | 10 | 13 | 14,5 | 14 | 10 | | | | | | | | | | | |
| Pulverförmiges, mineralisches Füllmaterial | 60 | 34,8 | 57 | 57 | 60 | 50 | 49,6 | 48 | 44,5 | 42,4 | 39,7 | 36,1 | 35,1 | 34 | 33,4 | 18,7 |
| Tackifier | | 8,7 | | | | | | | | | | | | | | |
| Faserförmiges, organisches Füllmaterial | | | | | | | 0,3 | 0,3 | | | | | | | | |
| Faserförmiges, mineralisches Füllmaterial | | | | | | | | | | | | | | | | 16 |
| Antioxidationsmittel | | | | | | | 0,4 | 0,4 | 0,4 | 0,4 | 0,4 | 0,4 | 0,3 | 0,28 | 0,28 | 0,2 |
| Stabilisationsmittel | | | | | | | | | 0,2 | 0,2 | 0,2 | 0,2 | 0,2 | 0,12 | 0,12 | 0,1 |
| Dritter vorvernetzter Butylkautschuk | | | | | | | | | | | | | | 2,8 | 4,2 | |
| Polyisobutylen | | | | | | | | | | | | | | | | 5 |
| Vernetzungsmittel | | | | | | | | | | | | | | 0,6 | 0,6 | |
| Schälfestigkeit/Schälwiderstand [N/cm] | 3,4 | 3,1 | 2,1 | 2,6 | 3,5 | 4,1 | 4,1 | 4,3 | 5,6 | 8,9 | 6,9 | 6,2 | 9,1 | 11,0 | 12,0 | 10,4 |

In den Vergleichszusammensetzungen 1 bis 5 wurde als Weichmacher ein Prozessöl eingesetzt. Flüssiges Polyisobutylen und Weichmacher wurden in den Vergleichszusammensetzungen 1 bis 5 deshalb eingesetzt, um hier in etwa eine ähnliche Zusammensetzung in Hinblick auf die Viskosität etc. zu erhalten, wie dies bei den Zusammensetzungen 6 bis 16 der Fall ist, die einen ersten flüssigen depolymerisierten Kautschuk enthalten. Der eingesetzte depolymerisierte (erste) Beutylkautschuk wies eine scheinbare Brookfield-Viskosität von 1.300.000 bei 66°C und ein mittleres Molekulargewicht von 42.000 g/mol bzw. eine scheinbare Brookfield-Viskosität bei 66°C von 800.000 und ein mittleres Molekulargewicht von 36.000 g/mol auf. Als zweiter, fester Butylkautschuk wurde ein solcher mit einer Mooney-Viskosität ML (1+8) 125°C von 51 +/- 5 MU gemäß ISO 289 in der Version 2000-01 und einer Ungesättigtheit von 1,85 +/- 0,2 Mol % eingesetzt, als dritter, vorvernetzter Butylkautschuk ein solcher mit einer Mooney Viskosität ML (1+3) 127°C von 80-90 MU. Als Polyisobutylen wurde ein solches mit einer mittleren relativen Molmasse $\overline{M}_v$ von etwa 4.000.000 g/mol (Viskositätsmittel) eingesetzt. Als mineralisches, pulverförmiges Füllmaterial wurde ein Talkum eingesetzt, der ein natürliches Gemenge aus Magnesiumsilikathydrat und Magnesiumaluminumsilikathydrat mit ausgeprägter Blättchenstruktur darstellt. Als faserförmiger organischer Füllstoff wurde eine Acrylnitrilfaser mit einer Feinheit von 1,5 dtex und einer Länge von 12 mm eingesetzt und als faserförmiges mineralisches Füllmaterial ein Wollastonit mit Nadelstruktur. Ansonsten wurden übliche Antioxidationsmittel eingesetzt und als Stabilisationsmittel Stearinsäure. Als Vernetzungsmittel wurde ein Phenolharz eingesetzt. Sämtliche Angaben in der obigen Tabelle sind Angaben in Gew-%, wobei die Gew.-% jeweils bezogen sind auf die Gesamtmenge der jeweiligen Korrosionsschutzzusammensetzungen.

Die Korrosionsschutzzusammensetzungen 1 bis 16 gemäß obiger Tabelle wurden hergestellt in Form eines dreilagigen Bandes mit einer Lage aus den genannten Zusammensetzungen auf einer Trägerfolie aus Polyethylen, die auf der der Zusammensetzung zugewandten Seite eine Haftvermittlungsschicht aufweist, mit einer Stärke von insgesamt ca. 1 mm. Mit diesem wurde dann ein Stahlrohr bei Raumtemperatur von 23°C einlagig und nicht überlappend umwickelt. Dabei ergaben sich bei der Bestimmung der Schälfestigkeit/Schälwiderstandes die in der obigen Tabelle angegebenen Werte. Hierbei wird deutlich, dass die Zusammensetzungen 6 bis 16 deutlich höhere Werte für den Schälwiderstand/Schälfestigkeit aufweisen als die Zusammensetzungen gemäß den Vergleichszusammensetzungen 1 bis 5. Dabei ergaben sich insbesondere bei den Zusammensetzungen 11 bis 16 sehr gute kohäsive Trennbilder bei einer beidseitig sehr guten Benetzung des Stahls, bei der Zusammensetzung 10 ergab sich ein kohäsives Trennbild, jedoch bei einem sehr schnellen Abziehen ein eher adhäsives Trennbild. Auch bei den Zusammensetzungen 6 bis 9 ergaben sich kohäsive Trennbilder.

Die durchgeführten Versuche zeigen, dass mit der Korrosionsschutzzusammensetzung vorteilhafte Werte in Hinblick auf die Schälfestigkeit/Schälwiderstand, bestimmt gemäß DIN EN 12068 in der Version 1999-03, erzielbar sind, und in aller Regel auch hervorragende kohäsive Trennbilder, verbunden mit einer guten Benetzung des Untergrundes, hier eines Stahlrohres. Es wurden keine Voranstrichmittel bzw. Primer eingesetzt. Diese sind bei den Vergleichszusammensetzungen jedoch notwendig einzusetzen, um die Norm gemäß DIN EN 12068 in der Version 1999-03 zu erfüllen. Insbesondere die Zusammensetzungen 14 bis 16 übererfüllen die Norm DIN EN 12068 in der Version 1999-03 in Hinblick auf den Schälwiderstand/Schälfestigkeit.

Mit der vorliegenden Erfindung wird eine Verwendung einer Korrosionsschutzzusammensetzung zur Verfügung gestellt, welche sowohl in streichfähiger bzw. spachtelfähiger Form als auch in Form eines Bandes oder Schrumpfmanschette, in welcher Ausführung auch immer, eingesetzt werden kann und dabei sehr gute Hafteigenschaften aufweist, mithin einen langlebigen Korrosionsschutz der mit dieser versehenen Produkte, Anlagen, Einbauten, Rohre, Pipelines etc. vermittelt. Vorteilhafterweise kann diese, in welcher Form auch immer, ohne einen Primer/Haftvermittler eingesetzt werden.

**Patentansprüche**

1. Verwendung einer Zusammensetzung umfassend mindestens einen ersten Butylkautschuk mit einer scheinbaren Viskosität nach Brookfield bei 66°C gemäß DIN EN ISO 2555 in einem Bereich von 400.000 mPa · s bis 2.000.000 mPa · s und einem mittleren Molekulargewicht in einem Bereich von 20.000 g/mol bis 60.000 g/mol und mindestens einen zweiten Butylkautschuk mit einem mittleren Molekulargewicht in einem Bereich von 150.000 g/mol bis 2.000.000 g/mol und einer Mooney Viskosität ML (1+8) bei 125°C in einem Bereich von 25 MU bis 65 MU, gemessen gemäß ISO 289, zum Schutz von Rohren und Rohre umfassenden Anlagen sowie sonstigen Anlagen und Einbauten vor Korrosion.

2. Verwendung gemäß Anspruch 1, **dadurch gekennzeichnet, dass** der mindestens eine erste Butylkautschuk in einer Menge in einem Bereich von 20 Gew.-% bis 66 Gew.-%, bezogen auf die Gesamtmenge der Zusammensetzung, in der Zusammensetzung vorhanden ist.

3. Verwendung gemäß einem oder mehreren der vorhergehenden Ansprüche, **dadurch gekennzeichnet, dass** der mindestens eine zweite Butylkautschuk in einer Menge in einem Bereich von 5 Gew.-% bis 50 Gew.-%, bezogen auf die Gesamtmenge der Zusammensetzung, in der Zusammensetzung vorhanden ist.

4. Verwendung gemäß einem oder mehreren der vorhergehenden Ansprüche, **dadurch gekennzeichnet, dass** der mindestens eine erste Butylkautschuk ausgewählt ist aus einer Gruppe umfassend depolymerisierte Butylkautschuke.

5. Verwendung gemäß einem oder mehreren der vorhergehenden Ansprüche, **dadurch gekennzeichnet, dass** der mindestens eine zweite Butylkautschuk Werte für die Ungesättigtkeit in einem Bereich von 1 mol-% bis 3 mol-% aufweist.

6. Verwendung gemäß einem oder mehreren der vorhergehenden Ansprüche, **dadurch gekennzeichnet, dass** der mindestens eine zweite Butylkautschuk hergestellt ist durch eine Copolymerisation von Isobutylen und Isopren in Methylchlorid als Lösemittel.

7. Verwendung gemäß einem oder mehreren der vorhergehenden Ansprüche, **dadurch gekennzeichnet, dass** diese Zusammensetzung weiterhin umfasst mindestens einen dritten, insbesondere vorvernetzen, Butylkautschuk, mindestens ein Füllmaterial, mindestens ein Antioxidationsmittel, mindestens ein Vernetzungsmittel, mindestens ein Elastomer und/oder mindestens ein Stabilisationsmittel.

8. Verwendung gemäß Anspruch 7, **dadurch gekennzeichnet, dass** das mindestens eine Füllmaterial in einer Menge in einem Bereich von 20 Gew.-% bis 70 Gew.-%, bezogen auf die Gesamtmenge der Zusammensetzung, in der Zusammensetzung vorhanden ist.

9. Verwendung gemäß einem der Ansprüche 7 oder 8, **dadurch gekennzeichnet, dass** das mindestens eine Füllmaterial pulverförmig oder faserförmig ist.

10. Verwendung gemäß einem oder mehreren der vorhergehenden Ansprüche, **dadurch gekennzeichnet, dass** die Zusammensetzung ein erstes pulverförmiges Füllmaterial und ein zweites faserförmiges Füllmaterial umfasst.

11. Verwendung gemäß einem oder mehreren der vorhergehenden der Ansprüche 7 bis 10, **dadurch gekennzeichnet, dass** das mindestens eine Elastomer ausgewählt ist aus einer Gruppe umfassend Polyisobutylen mit einem Staudinger-Index $J_o$ in einem Bereich von 230 cm$^3$/g bis 900 cm$^3$/g und mit einer mittleren relativen Molmasse (Viskositätsmittel) in einem Bereich von 900.000 g/mol bis 5.500.000 g/mol.

12. Verwendung gemäß einem oder mehreren der vorhergehenden Ansprüche, **dadurch gekennzeichnet, dass** die Zusammensetzung in Bandform oder Mattenform vorliegt.

13. Verwendung gemäß Anspruch 12, **dadurch gekennzeichnet, dass** das Band zweischichtig oder mehrschichtig aufgebaut ist, wobei mindestens eine Schicht die Zusammensetzung umfasst.

14. Verfahren zur Erzielung eines Korrosionsschutzes auf Rohren und Rohre umfassenden Anlagen sowie sonstigen Anlagen und Einbauten durch Aufbringung der Zusammensetzung gemäß einem oder mehreren der Ansprüche 1 bis 13, wobei Rohre bzw. Rohre umfassende Anlagen sowie sonstige Anlagen und Einbauten mit einem mindestens einschichtigen Band, umfassend die Zusammensetzung, umwickelt werden.

15. Mindestens einschichtiges Wickelband, umfassend die Zusammensetzung gemäß einem oder mehreren der Ansprüche 1 bis 13.

**Claims**

1. Use of a composition comprising at least one first butyl rubber having an apparent viscosity according to Brookfield at 66° C according to DIN EN ISO 2555 in a range of 400,000 mPa·s to 2,000,000 mPa·s and an average molecular weight in a range of 20,000 g/mole to 60,000 g/mole and at least one second butyl rubber having an average molecular weight in a range of 150,000 g/mole to 2,000,000 g/mole and a Mooney viscosity ML (1+8) at 125° C in a range of 25 MU to 65 MU, measured according to ISO 289, for protecting pipes and units comprising pipes as well as other units and installations against corrosion.

2. Use according to claim 1, **characterized in that** the at least one first butyl rubber is present in the composition in a quantity in a range of 20 % by weight to 66 % by weight, in relation to the overall quantity of the composition.

3. Use according to one or more of the preceding claims, **characterized in that** the at least one second butyl rubber is present in the composition in a quantity in a range of 5 % by weight to 50 % by weight, in relation to the overall quantity of the composition.

4. Use according to one or more of the preceding claims, **characterized in that** the at least one first butyl rubber is selected from a group comprising depolymerized butyl rubbers.

5. Use according to one or more of the preceding claims, **characterized in that** the at least one second butyl rubber has values for the unsaturation in a range of 1 mole-% to 3 mole-%.

6. Use according to one or more of the preceding claims, **characterized in that** the at least one second butyl rubber is produced through a copolymerization of isobutylene and isoprene in methyl chloride serving as a solvent.

7. Use according to one or more of the preceding claims, **characterized in that** said composition furthermore comprises at least one third, in particular cross-linked, butyl rubber, at least one filler, at least one antioxidant, at least one cross-linking agent, at least one elastomer, and/or at least one stabilizer.

8. Use according to claim 7, **characterized in that** the at least one filler is present in the composition in a quantity in a range of 20 % by weight to 70 % by weight, in relation to the overall quantity of the composition, in which the composition is contained.

9. Use according to one of the claims 7 or 8, **characterized in that** the at least one filler is powdered or fibrous.

10. Use according to one or more of the preceding claims, **characterized in that** the composition comprises a first powdered filler and a second fibrous filler.

11. Use according to one or more of the preceding claims 7 to 10, **characterized in that** the at least one elastomer is selected from a group comprising polyisobutylene having a Staudinger index $J_o$ in a range of 230 $cm^3$/g to 900 $cm^3$/g, and having an average molar mass (viscosity agent) in a range of 900,000 g/mole to 5,500,000 g/mole.

12. Use according to one or more of the preceding claims, **characterized in that** said composition is present in the form of a tape or a mat.

13. Use according to claim 12, **characterized in that** the tape has a two-layered or multilayered structure, wherein at least one layer comprises the composition.

14. Method for obtaining a corrosion protection on pipes and units comprising pipes, as well as other units and installations, through the application of the composition according to one or more of the claims 1 to 13, wherein pipes respectively units comprising pipes as well as other units and installations are wrapped with an at least single-layered tape, comprising said composition.

15. At least single-layered wrapping tape, comprising the composition according to one or more of the claims 1 to 13.

**Revendications**

1. Utilisation d'une composition comprenant au moins un premier caoutchouc butyle avec une viscosité apparente Brookfield à 66 °C selon la norme DIN EN ISO 2555 dans une plage comprise entre 400.000 mPa - s et 2.000.000 mPa - s et un poids moléculaire moyen dans une plage comprise entre 20.000 g/mol et 60.000 g/mol et au moins un deuxième caoutchouc butyle avec un poids moléculaire moyen dans une plage comprise entre 150.000 g/mol et 2.000.000 g/mol et une viscosité Mooney ML (1+8) à 125 °C dans une plage comprise entre 25 MU et 65 MU, mesurée selon la norme ISO 289, pour la protection de tuyaux et installations comprenant des tuyaux ainsi que d'autres installations et constructions, contre la corrosion.

**2.** Utilisation selon la revendication 1, **caractérisée en ce qu'**au moins un premier caoutchouc butyle est présent, dans la composition, en une quantité située dans une plage comprise entre 20 % en poids et 66 % en poids, en rapport à la quantité totale de la composition.

**3.** Utilisation selon l'une ou plusieurs des précédentes revendications, **caractérisée en ce qu'**au moins un deuxième caoutchouc butyle est présent, dans la composition, en une quantité située dans une plage comprise entre 5 % en poids et 50 % en poids, en rapport à la quantité totale de la composition.

**4.** Utilisation selon l'une ou plusieurs des précédentes revendications, **caractérisée en ce qu'**au moins un premier caoutchouc butyle est choisi dans un groupe contenant des caoutchoucs butyles dépolymérisés.

**5.** Utilisation selon l'une ou plusieurs des précédentes revendications, **caractérisée en ce qu'**au moins un deuxième caoutchouc butyle présente des valeurs pour l'insaturation située dans une plage comprise entre 1 % mol. et 3 % mol..

**6.** Utilisation selon l'une ou plusieurs des précédentes revendications, **caractérisée en ce qu'**au moins un deuxième caoutchouc butyle est fabriqué par copolymérisation d'isobutylène et d'isoprène dans du chlorure de méthyle en tant que solvant.

**7.** Utilisation selon l'une ou plusieurs des précédentes revendications, **caractérisée en ce que** cette composition comprend en outre au moins un troisième caoutchouc butyle, en particulier préréticulé, au moins un matériau de remplissage, au moins un antioxydant, au moins un agent de réticulation, au moins un élastomère et/ou au moins un agent de stabilisation.

**8.** Utilisation selon la revendication 7, **caractérisée en ce qu'**au moins un matériau de remplissage est présent, dans la composition, en une quantité située dans une plage comprise entre 20 % en poids et 70 % en poids, en rapport à la quantité totale de la composition.

**9.** Utilisation selon l'une des revendications 7 ou 8, **caractérisée en ce qu'**au moins un matériau de remplissage est pulvérulent ou fibreux.

**10.** Utilisation selon l'une ou plusieurs des précédentes revendications, **caractérisée en ce que** la composition comprend un premier matériau de remplissage sous forme de poudre et un deuxième matériau de remplissage fibreux.

**11.** Utilisation selon l'une ou plusieurs des précédentes revendications 7 à 10, **caractérisée en ce qu'**au moins un élastomère est choisi dans un groupe contenant du polyisobutylène avec un indice de Staudinger Jo située dans une plage comprise entre 230 cm3/g et 900 cm3/g et une masse moleculaire relative moyenne (viscosité) située dans une plage comprise entre 900.000 g/mol à 5.500.000 g/mol.

**12.** Utilisation selon l'une ou plusieurs des précédentes revendications, **caractérisée en ce que** la composition est sous forme de bande ou sous forme de tapis.

**13.** Utilisation selon la revendication 12, **caractérisée en ce que** la bande est bi ou pluricouches, au moins une couche comprenant la composition.

**14.** Procédé pour obtenir une protection contre la corrosion sur des tuyaux et installations comprenant des tuyaux ainsi que d'autres installations et constructions, par application de la composition selon l'une ou plusieurs des revendications 1 à 13, les tuyaux ou installations comprenant des tuyaux, ainsi que les autres installations et constructions étant enroulés avec au moins une bande monocouche, comprenant la composition.

**15.** Bande d'enroulement au moins monocouche, comprenant la composition selon l'une ou plusieurs des précédentes revendications 1 à 13.

**IN DER BESCHREIBUNG AUFGEFÜHRTE DOKUMENTE**

**In der Beschreibung aufgeführte Patentdokumente**

- EP 0421607 A1
- US 5295525 A
- US 4426468 A